Europäisches Patentamt

European Patent Office

Office européen des brevets

(19)

(11) **EP 1 245 976 A1**

(12) **EUROPEAN PATENT APPLICATION**

(43) Date of publication:
**02.10.2002 Bulletin 2002/40**

(51) Int Cl.⁷: **G02B 6/35**

(21) Application number: **01108133.8**

(22) Date of filing: **30.03.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Corning O.T.I. S.p.A.**
**20126 Milano (IT)**

(72) Inventors:
• **Pianciola, Aurelio**
**27045 Casteggio (PV) (IT)**

• **Milanese, Paolo**
**27020 Olevano di Lomellina (PV) (IT)**

(74) Representative: **Poole, Michael John et al**
**Corning Communications Ltd.,**
**Patent and Licensing Dpt.,**
**Quantum House,**
**Maylands Avenue**
**Hemel Hempstead, Herts. HP2 7DE (GB)**

(54) **Optical switch configuration**

(57)     An optical switch comprises at least a first input optical guide (1) having a first beam exit termination (11) and a first and second output optical guides (3,4) respectively having first and second beam entrance terminations (31,41), and a movable reflecting element (6), operatively associated with said exit termination and entrance terminations, movable between a first position and a second position, the first position causing an optical beam (14) exiting from said exit termination to be directed towards the first entrance termination, the second position causing said optical beam to be directed towards the second entrance termination. A normal direction to each of said exit termination and entrance terminations forms a first angle (α1), different from 0°, with an optical axis (12,32,42) of the respective guide, said first angle depending on optical properties of the guides and of an optical transmissive medium between the exit termination and entrance terminations and being such that back-reflected beams inside the guides are attenuated with respect to a guide termination perpendicular to the optical axes of the guides. The optical switch is suitable to be integrated in a substrate, with integrated guides converging to a recess formed in the substrate and adapted to movably house the reflecting element.

Fig. 7

EP 1 245 976 A1

**Description**

The present invention relates generally to optical components, and specifically concerns optical switch devices. In particular, the invention concerns an optical switch for switching optical signals between optical guides. Still more particularly, but not limitatively, the invention relates to a micro-machined optical switch, with integrated planar optical guides.

Silicon micro-machining, which enables to integrate in semiconductor chips entire Micro Electro-Mechanical Systems (MEMS), is currently the most promising technology in the field of optical components. In fact, this technology allows to integrate on a single silicon chip several optical functions, with obvious advantages in terms of miniaturization and performance.

In particular, MEMS technology is proving useful for forming arrays of optical switches to be used as optical cross-connects (OXCs) in the field of optical communications.

The techniques used for silicon micro-machining directly derive from the art of electronic integrated circuits, and in particular make use of selective etchings of silicon to form the desired structures.

Several manufacturers of optical components already offer micro-machined optical switches, from the base elements (1x2 and 2x2 switches) up to higher-order arrays (8x8, 16x16 and more), showing good performances in terms of insertion losses and switching time.

A still not completely solved problem of this technology, which limits the application thereof to the field of optics, concerns the optical interconnection, that is, the interfacing between the silicon chip including the micro-machined optical elements (typically, mirrors and related actuators) for the optical beam deflection, and the optical fibres that allow to connect the device to the other components of the system, for example an optical transmission system.

In fact, the dimensions of the optical fibres and the requirements of spacing therebetween do not allow to keep the optical path outside the optical guides as short as desired, with the consequence that significant losses are introduced in the signal optical power.

Considering that an optical fibre has a typical dimension of approximately 125 μm and that micro-machined mirrors, with the respective micro-actuators, cannot be smaller than 30-40 μm not to induce aberrations on the optical beam, the optical path between the input and output fibres is of the order of 100 μm. Supposing, as it normally is, that along such a path the optical beam propagates freely in air, a propagation loss of approximately 3 dB(*i.e.*, approximately 50% of attenuation) is introduced.

In order to overcome this drawback, the following solutions have been envisaged.

A first solution, described for example in L.Y. Lin et al, "Free-Space Micromachined Optical Switches with Submillisecond Switching Time for Large-Scale Optical Crossconnects", Photonics Technology Letters, Vol. 10, No. 4, April 1998, and in WO 00/73842, provides for using micro lenses placed in front of the fibres as light collimators. The collimators reduce the angular divergence of the optical beam exiting from the fibres, and so the propagation losses are reduced.

As a consequence of the requirements in terms of miniaturization of the chip and of dimensions of the optical elements used as collimators, these latter cannot provide an output beam of large diameter: the output beam diameter is normally lower than 100 μm, while collimators used in conventional micro-optic devices provide an output beam with diameter of approximately 400 μm. This approach can be employed for the realization of three-dimensional switch arrays, with higher integration scales.

The Applicant has observed that a main limitation of this solution resides in the difficulty of positioning the collimators, either single or in arrays.

A second solution provides for tapering the optical fibres by means of chemical etching, until diameters of approximately 30 μm are achieved. In this way, the optical fibres can be positioned in suitable "V"-shaped grooves, formed in the silicon chip near the mirror.

This solution is for example described in C. Marxer et al, "Micro-Opto-Mechanical 2x2 Switch for Single-Mode Fibres Based on Plasma-Etched Silicon Mirror and Electrostatic Actuation", Journal of Lightwave Technology, Vol. 17, No. 1, January 1999, which discloses a 2x2 optical switch for single mode fibres in which the switching principle is based on a vertical micro-mirror which can be moved into the optical path to switch light between two pairs of fibres. Fabrication is based on the silicon micro-machining technology. The four fibres are placed into grooves and are tapered: the cladding glass of the fibre is partially etched away in order to reduce the fibre diameter and to bring the fibre ends closer together. The use of silicon micro-machining technology allows to integrate the switching mirror, its electrostatic actuator and the alignment grooves for the fibres on the same chip.

Another example of this solution is provided in C. Marxer et al, "Vertical Mirror Fabricated by Deep Reactive Ion Etching for Optic-Optic Switching Applications", Journal of Microelectromechanical Systems, Vol. 6, No. 3, September 1997, describing an optic-optic 2x2 switch in which Deep Reactive Ion Etching (DRIE) of a Silicon-On-Insulator (SOI) substrate is used to fabricate fibre grooves, suspension structures and actuators, and the mirror in the same etching step. Four single-mode fibres with tapered ends are placed and glued into alignment grooves at 90°.

The Applicant has observed that a main limitation of this solution resides in the impossibility of forming arrays of switches on a same chip, due to technological limitations and to difficulties in handling the optical fibers. Consequently, this technique can only be used for forming elementary 1x2 or 2x2 optical switches.

A third solution provides for forming the mirror and actuator structures in relief on a first silicon chip by using micro-machining techniques. The mirrors formed in this way are very thin, typically 1 or 2 μm. The actuators can for example be comb-drive actuators, which allow for limiting the dimensions of the overall mirror and actuator structures. On a second silicon chip a similar structure is formed, having recesses formed by selective etchings and adapted for housing the mirror and actuator structures; optical guides are also formed on the second chip. The first chip is then superimposed on the second chip, and the two chips are soldered together by means of the "flip-chip" method, making the recesses formed in the second chip to correspond to the mirrors of the first chip in such a way that the optical guides are properly located with respect to the mirrors. Subsequently, the interconnection between the optical guides and external optical fibres is realized by means of conventional techniques (*e.g.*, using blocks of multifibre arrays), assuring low losses and high reliability.

This approach conjugates the advantages of the first solution with those of the second solution. In fact, a high scale of integration can be achieved, which makes it possible to integrate on a single chip arrays of optical switches. Additionally, the optical path outside the guides can be kept short, and the positioning problems inherent in the use of collimators are avoided. However, even this third solution is not exempt by problems.

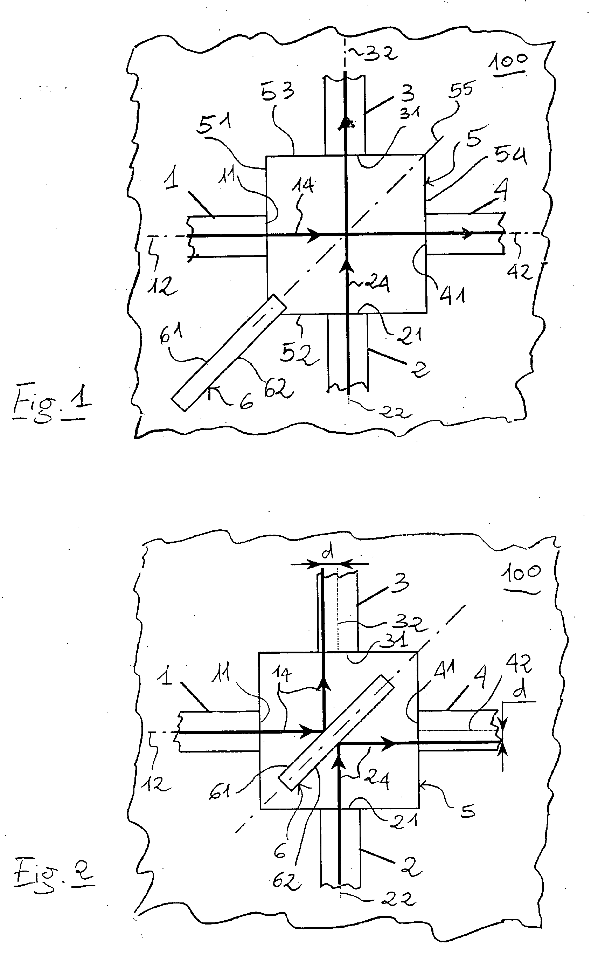

With reference to Figures 1 and 2, an integrated optical switch according to the third above-mentioned solution is schematically shown. The optical switch comprises, integrated in a substrate 100, a first and a second input optical guides 1, 2, having respective optical axes 12, 22, and a first and a second output optical guides 3, 4 having respective optical axes 32, 42. The axes 12, 22 of the input guides 1, 2 and the axes 32, 42 of the output guides are perpendicular to each other. Moreover, the axis 12 of the first input guide 1 coincides with the axis 42 of the second output guide 4, while the axis 22 of the second input guide 2 coincides with the axis 32 of the first output guide 3.

The guides 1, 2, 3, 4 are for example silica based glass optical guides on silicon. Preferably, the dimensions of the guides are chosen in such a way that the guided optical mode has a radius of approximately 5 μm at a wavelength of approximately 1550 nm. This allows to have a low losses (less than 0.1 dB) when the integrated guides are coupled with single-mode optical fibres normally used in optical communication technology.

The input guides 1, 2 and the output guides 3, 4 converge to a recess 5 formed by etching in the substrate 100. The recess 5 has a square shape and the axes 12, 22, 32, 42 of the guides 1, 2, 3, 4 are perpendicular to respective side walls 51, 52, 53, 54 of the recess 5 and intersect such sides substantially at the centre thereof. In correspondence of the recess side walls, the guides 1, 2, 3, 4 have terminations 11, 21, 31, 41 which are perpendicular to the respective axes 12, 22, 32, 42.

The recess 5 contains an optical transmissive medium, such as air, and is adapted to house a mirror 6 with a first and a second parallel reflecting surfaces 61, 62. The mirror, together with the associated micro-actuators (not shown), is formed by means of micro-machining techniques in a separate silicon chip, which is then superimposed and soldered to chip 100, for instance by means of the flip-chip technique.

The mirror 6, which is aligned to a diagonal 55 of the recess 5, is movable inside the recess between two positions, under the action of the micro-actuators.

In a first position, shown in Figure 1, the mirror 6 is substantially out of the recess and does not intercept a beam 14 propagating along the axis 12 of the first input guide 1 or a beam 24 propagating along the axis 22 of the second input guide 2. Consequently, after propagating through the recess 5 the beams 14 and 24 enter the second, respectively first output guides 4, 3 and continue propagating along the axes 42, 32 thereof. When the mirror 6 is in this first position the optical switch is said to be in the bar condition.

In a second position, shown in Figure 2, the mirror 6 is inside the recess 5 and intercepts the beams 14 and 24. Due to the mirror orientation, the angle of incidence of the beams 14, 24 against the first, respectively second reflecting surfaces 61, 62 is 45°. Thus, the beam 14 is reflected towards the first output guide 3 parallel to the axis 32 thereof, and at the same time the beam 24 is reflected towards the second output guide 4 parallel to the axis 42 thereof. Consequently, after propagating through the recess 5, the beams 14 and 24 enter the first, respectively second output guides 3, 4 and continue propagating in a direction parallel to the axes 32, 42 thereof. With the mirror in this second position the optical switch is said to be in the cross condition.

In order to have low insertion losses, the optical path within the recess 5 should be as short as possible. In fact, since the propagation of the beams 14 and 24 within the recess 5 is not guided, the beams are subjected to an angular divergence which is higher the longer the optical path within the recess.

The length of the optical path within the recess can be reduced by reducing the dimensions of the recess 5, that is the length of the side walls 51, 52, 53, 54 thereof.

However, as the Applicant has observed, there is a limit to the reduction of the recess dimensions. First of all, the recess shall be sufficiently large to house the mirror 6 and the associated micro-actuators. Secondly, when the recess dimensions become too small, the beams entering the recess from the input guides are partialized, with a consequent increase in the losses.

A trade off must thus be found between contrasting requirements.

The Applicant has also observed that the losses introduced by the optical switch are different in the bar and cross conditions.

Indicating with reference numerals 14 and 24 the centres of the propagating beams, it can be seen that while in the bar condition the beams 14, 24 continue to propagate along the axes 32, 42 of the output guides 3, 4, this is not so in the cross condition. In the latter, due to the thickness of the mirror 6, the beams 14, 24 propagate through the output guides 3, 4 along directions parallel but offset with respect to the output guide axes 32, 42. In other words, there is an offset d between the centre of the beams and the centres of the output guides. The consequence of this is that different losses exist in the bar and cross conditions.

Moreover, the Applicant has observed that the performances of the optical switch are limited by back-reflected beams which propagate through the optical guides.

The Applicant has therefore devised an optical switch configuration that is not affected by the above-mentioned limitations and drawbacks.

The Applicant has found that, by terminating the optical guides with a suitable angle instead that perpendicularly to the optical guide axes, it is possible to design an optical switch having an optimised configuration.

A first aspect of the invention relates to an optical switch comprising:

at least a first input optical guide having a first beam exit termination and a first and second output optical guides respectively having first and second beam entrance terminations;
a movable reflecting element, operatively associated with said exit termination and entrance terminations, movable between a first position and a second position, the first position causing an optical beam exiting from said exit termination to be directed towards the first entrance termination, the second position causing said optical beam to be directed towards the second entrance termination,

characterised in that a normal direction to each of said exit termination and entrance terminations forms a first angle, different from 0°, with an optical axis of the respective guide, said first angle depending on optical properties of the guides and of an optical transmissive medium between the exit termination and entrance terminations and being such that back-reflected beams inside the guides are attenuated with respect to a guide termination perpendicular to the optical axes of the guides.

Preferably, said first angle is such that back-reflected beams inside the guides are attenuated of at least 40 dB. Still more preferably, the attenuation is at least 50 dB.

In particular, where the guides are silica based glass guides and the optical transmissive medium is air, said first angle is equal to or higher than approximately 7°. Preferably, the first angle is equal to or higher than 8°.

Preferably, a first intersection between ideal extensions of the first exit termination and the first entrance termination is located at a first distance from a centre of the first exit termination and at a second distance from a centre of the first entrance termination, and said extensions form a second angle which depends on the first and second distances and on an angle of incidence of an optical beam exiting the first exit termination against the reflecting element when the latter is in said first position.

Said first and second distances preferably range from approximately 10 μm to approximately 14 μm.

Said second angle can either be acute, and preferably comprised between approximately 68° and approximately 90°, or obtuse and preferably comprised between approximately 93° and approximately 115°.

Preferably, an optical path from the first exit termination to the second entrance termination is substantially equal to twice an optical path from the first exit termination to the reflecting element when the latter is in the first position.

The second distance can be substantially equal to said first distance and the reflecting element be so arranged that, when in the first position, the optical beam exiting the first exit termination enters the first entrance termination substantially at the centre thereof.

The optical switch can further comprise a second input optical guide having a second beam exit termination with a normal direction forming said first angle with an axis of the second input guide, the second input guide being arranged so that when the reflecting element is in the first position an optical beam exiting the second exit termination is directed towards the second entrance termination, while when the reflecting element is in the second position the optical beam is directed towards the first entrance termination. In this way, a 2x2 optical switch is obtained.

Preferably, ideal extensions of the second exit termination and the second entrance termination form said second angle and intersect at a second intersection located at said first distance from a centre of the second exit termination and at said second distance from a centre of the second entrance termination.

In the 2x2 optical switch, the reflecting element is preferably arranged so that when in the first position it is located substantially midway between said first and second intersections. Said second distance is thus preferably made substantially equal to said first distance minus a value depending on a thickness of the reflecting element, so to substantially balance the offset effect introduced by the mirror thickness between the bar and cross conditions.

Preferably, the axes of the first input guide and second output guide are parallel to each other, and the axes of the second input guide and first output guide are parallel to each other.

In particular, the axes of the first input guide and second output guide are perpendicular to the axes of the second input guide and first output guide.

In a preferred embodiment, said input guide or guides and said output guides are integrated in a substrate and converge to a recess formed in the substrate and adapted to movably house the reflecting element.

The recess can have a parallelogram shape with perimeter walls defined by the extensions of the first and second exit terminations and first and second entrance terminations.

A second aspect of the invention relates to an optical switching device comprising a plurality of optical switches realised as set forth hereinbefore and integrated in a same substrate.

In the optical switching device the plurality of optical switches is arranged to form a two-dimensional array, the optical switching device further comprising a first and a second arrays of input guides, a first and a second arrays of output guides, and interconnection guides for interconnecting the optical switches to each other.

Advantageously, each one of the arrays of guides is arranged along a respective side of the substrate.

The optical switching device can further comprise four arrays of optical fibres each one aligned to and connected with a respective one of arrays of guides.

Further features and advantages of the invention will be made apparent by the following detailed description of a possible practical embodiment thereof, provided merely by way of example and made in connection with the attached drawings, wherein:

Figures 1 and 2 schematically show a configuration of an integrated optical switch, in the cross and bar operating conditions;

Figures 3 and 4 show in detail the reflection of beams for two different positions of the mirror in the cross operating condition;

Figure 5 schematically shows an optical switch configuration partially solving the problems of the configuration of Figures 1 and 2;

Figure 6 schematically shows a guide termination according to the invention;

Figures 7, 8 and 9 schematically show three possible optical switch configurations according to the invention;

Figure 10 is a diagram showing the insertion loss (in dB) for the three optical switch configurations of Figures 7, 8 and 9 when used as 1x2 optical switches, as a function of an angle of incidence of the beam against the mirror;

Figure 11 is a diagram similar to that of Figure 10, taking into account effects of beam truncation;

Figure 12 corresponds to Figure 11, and relates to the configurations of Figures 7, 8 and 9 when used as 2x2 optical switches;

Figure 13 is a diagram of the insertion loss (in dB) for the optical switch configurations of Figures 7, 8 and 9 when used as 2x2 optical switches, as a function of a different parameter;

Figure 14 schematically shows an array of optical switches integrated in a chip, and

Figure 15 schematically shows an interconnection scheme for the array of Figure 14.

Referring to the optical switch configuration of Figures 1 and 2, as previously mentioned there is an offset d between the centre of the beams and the centres of the output guides. The consequence of this is that different losses exist in the bar and cross conditions.

Referring to Figure 3, the amount d of such an offset depends on a thickness s of the mirror, and is given by the formula $d = s \times \sin(\theta)$, where $\theta$ indicates the angle of incidence of the beams 14, 24 against the reflecting surfaces 61, 62 (that is, the angle formed by the beams with a direction 63 normal to the reflecting surfaces). 14' and 24' indicates the ideal reflect beams, should the mirror have a negligible thickness.

If it is known *a priori* that the device is intended to work as a 1x2 optical switch, the effect of the mirror thickness can be cancelled. Referring to Figure 4, by shifting the mirror 6 perpendicularly to the diagonal 55 so as to bring the first reflecting surface 61 aligned thereto, no offset in the reflected beam 14 exists. Thus, the losses in the bar and cross conditions are substantially the same. This solution however exacerbates the above-mentioned problem should the device be used as a 2x2 switch: in this case, the offset in the reflected beam 24 is twice that existing in the situation of Figure 3.

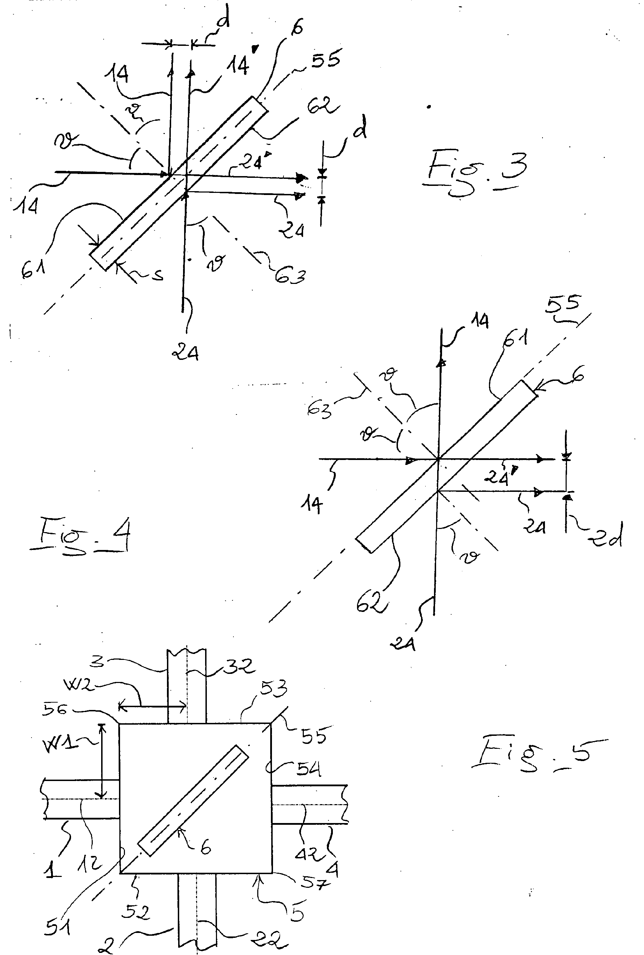

Figure 5 shows an arrangement of guides allowing for balancing the insertion losses in the bar and cross conditions in a 2x2 optical switch. Differently from the arrangement of Figures 1 and 2, the axes 32, 42 of the first and second output guides 3, 4 are displaced of an amount equal to d/2 towards the associated input guides 1, 2 in the cross condition. The axes 12 and 22 of the input guides 1 and 2 are at a distance W1 from a common vertex 56 and 57 of the recess side walls 51, 53 and 52, 54, where distance W1 is equal to half the length of a recess side wall, the axes 32 and 42 of the output guides 3 and 4 are at a distance $W2 = W1 - (d/2)$ from said vertex 56 and 57. In this way, both in the bar and in the cross conditions the beams propagating through the output guides are offset of d/2 with respect to the output guide axes.

In the optical switch configurations so far described the fibre terminations are perpendicular to the respective axes. An interface between an optical guide and an optical transmissive medium having different refraction index, such as an interface between a silica based glass optical guide and air causes back-reflections of an incident beam. In terms of optical power, the level of the back-reflections is approximately equal to 3.5% (-14.5 dB). Due to the fact that the fibre terminations are perpendicular to the fibre axes, the back-reflected beams are completely confined within the guides. This negatively affects the device performance.

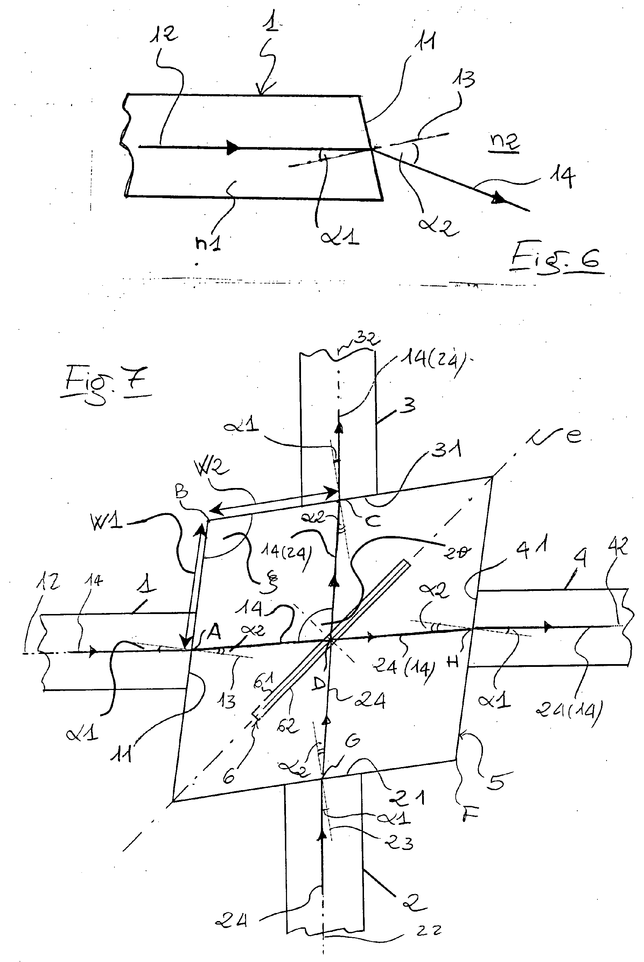

Figure 6 schematically shows a guide configuration overcoming the above-mentioned problem of back-reflections. Considering for example the first input guide 1, the termination 11 thereof is slanted with respect to a direction perpendicular to the guide axis 12. More specifically, a normal direction 13 perpendicular to the termination 11 forms with the optical axis 12 an angle $\alpha1$, different from $0°$, whose value is chosen to have low back-reflections inside the optical guide 10.

The value of the angle $\alpha1$ varies depending on the refraction indexes n1 of the optical guide and n2 of the optical transmissive medium within the recess. For example, if the optical guide is a silica based glass guide and the medium is air a value of at least $7°$ for angle $\alpha1$ allows to attenuate back-reflections inside the optical guide 10 of at least 40 dB; a value of approximately $8°$ for angle $\alpha1$ allows to achieve at least 50 dB of attenuation of the back-reflected beam inside the optical guide. Higher values for angle $\alpha1$ allow to achieve an attenuation even higher. For optical guides of different material, a suitable attenuation can be achieved for different values of angle $\alpha1$. For example, in the case of optical guides in lithium niobate a suitable value for angle $\alpha1$ is approximately $6°$. Clearly, the invention is not limited to a particular choice of material for the optical guides, nor to a particular optical transmissive medium.

An optical beam propagating through the optical guide 10 along the optical axis 12 thereof, after encountering the termination 11, continues to propagate in the medium along a direction 14 which forms an angle $\alpha2$ with the normal direction 13 perpendicular to the termination. According to Snell's law, it is:

$$n1 \sin \alpha1 = n2 \sin \alpha2$$

where n1 is the refraction index of the optical guide 10. Assuming that the medium is air, the value of angle $\alpha1$ is $8°$ and the optical guide is a silica based glass optical guide formed on silicon, the value of angle $\alpha2$ is approximately equal to $11.72°$.

In Figure 6 the guide termination 11 is slanted counter-clockwise with respect to the guide optical axis 12, so that the beam 14 is deflected clockwise. A similar result in terms of back-reflections is achieved if the guide termination 11 is slanted in the opposite sense (*i.e.*, clockwise), so that the beam 14 is deflected counter-clockwise.

The device of Figure 1 and 2 has been re-designed so as to have slanted terminations 11, 21, 31, 41 for the guides 1, 2, 3, 4.

Different spatial configurations of the optical switch are obtained depending on the fact that the terminations 11, 21 of the input guides 1, 2 are slanted clockwise or counter-clockwise.

In Figures 7, 8 and 9 three different spatial configurations are depicted.

A first spatial configuration, depicted in Figure 7, is also referred to as "left/right" configuration: the terminations 11, 21 of the two input guides 1, 2 are slanted in such a way that the beam 14 propagating through the first input guide 1, upon entering the recess 5 is deflected counter-clockwise (that is, towards the left), while the beam 24 propagating through the second input guide 2, upon entering the recess 5 is deflected clockwise (i.e., towards the right).

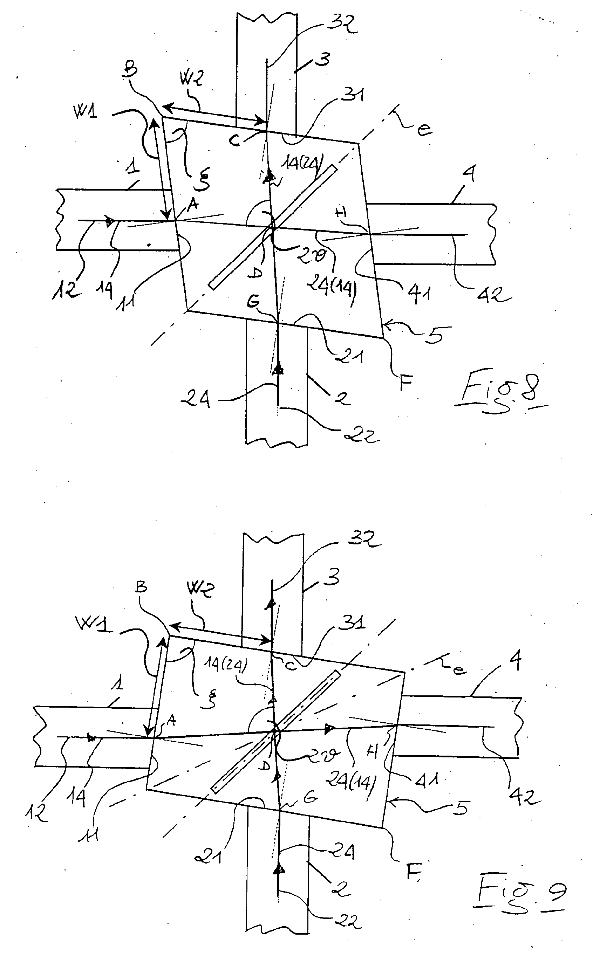

A second spatial configuration, depicted in Figure 8, is referred to as "right/left" configuration: the terminations 11, 21 of the two input guides 1, 2 are slanted in such a way that the beam 14 propagating through the first input guide 1, upon entering the recess 5 is deflected clockwise (towards the right), while the beam 24 propagating through the second input guide 2, upon entering the recess 5 is deflected counter-clockwise (towards the left).

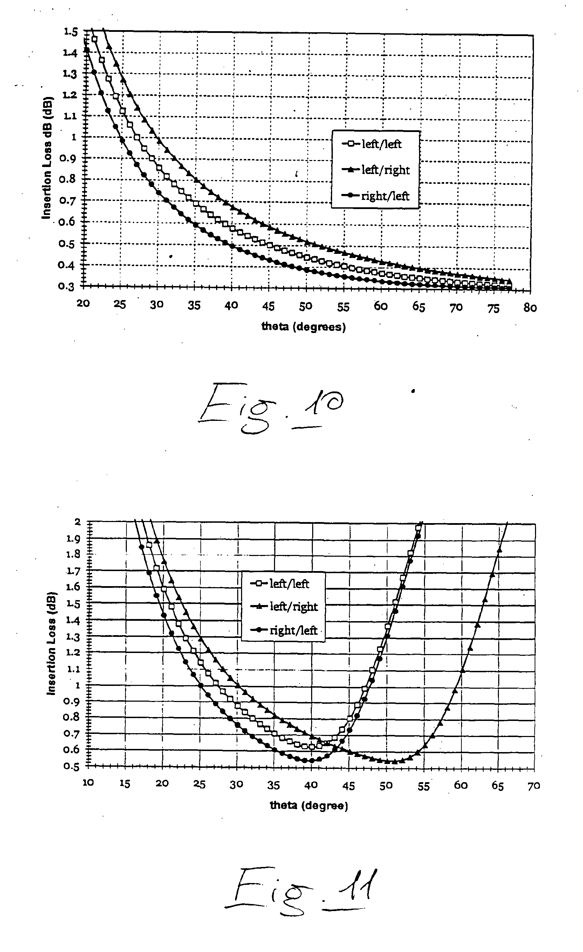

A third configuration, depicted in Figure 9, is referred to as "left/left" configuration: both the beam 14 propagating through the first input guide 1 and the beam 24 propagating through the second input guide, upon entering the recess 5 are deflected counter-clockwise, that is towards the left.

A fourth possible configuration, not shown, is called "right/right" configuration: in this configuration both the beam propagating through the first input guide and that propagating through the second input guide, upon entering the recess are deflected clockwise, i.e. towards the right. This configuration will not be examined in detail since it is totally equivalent to the "left/left" configuration.

In all the shown spatial configurations, the axes 12, 42 of the first input guide 1 and second output guide 4 are parallel to each other, as are the optical axes 22, 32 of the second input guide 2 and first output guide 3. Also, the axes of guides 2 and 3 are perpendicular to the axes of guides 1 and 4. However, this is not to be intended as a limitation of the present invention.

The recess 5, instead of having a square shape, has the shape of a parallelogram.

The "left/right" and "right/left" spatial configurations (Figures 7 and 8) are symmetrical with respect to a diagonal e of the parallelogram leaving at the left thereof the first input guide 1 and first output guide 3. The mirror 6 is oriented along such a diagonal e. The "left/left" spatial configuration (Figure 9) is not symmetrical, and the mirror 6 in not directed along the diagonal e of the parallelogram.

A centre A of the first input guide termination 11 is located at a distance W1 from a vertex B of the parallelogram situated between the first input guide 1 and the first output guide 3. In turn, a centre C of the first output guide termination 31 is located at a distance W2 from the vertex B. Similarly, considering a vertex F of the parallelogram situated between the second input guide 2 and the second output guide 4, a centre G of the second input guide termination 21 is located at the distance W1 vertex F, and a centre H of the second output guide termination 41 is located at a distance W2 from vertex F.

The orientation of the mirror 6 when the latter is in its second operating position determines an angle of deflection $2\theta$ of the optical beams 14, 24, said angle of deflection being equal to twice the angle of incidence $\theta$ of the beams against the reflecting surfaces 61, 62 of the mirror. The direction of the deflected beams depends on the mirror orientation and the angle $\theta$ of incidence of the beams against the mirror.

For each spatial configuration of the optical switch, the distances W1, W2 and the angle $\theta$ univocally determine the angle $\xi$ between the consecutive sides of the parallelogram concurring at vertex B. Distances W1, W2 and angle $\theta$ univocally determine as well the length of the optical path in the cross condition.

Let first be assumed that the mirror 6 has a negligible thickness. The distances W1 and W2 are then made equal to each other.

When the optical switch is in the cross condition the optical path of the beam 14 within the recess is equal to the sum of the lengths of segments [A;D] and [D;C], where D is the point of impact of the beam against the mirror 6. Similarly, the optical path of the beam 24 is equal to the sum of the lengths of segments [G;D] and [D;H].

When the switch is in the bar condition the optical path of the beam 14 within the recess is equal to the sum of the lengths of segments [A;D] and [D;H], while the optical path of the beam 24 is equal to the sum of the lengths of the segments [G;D] and [D;C].

For the "left/right" and "right/left" spatial configurations of Figures 7 and 8, which are symmetric with respect to the diagonal e of the parallelogram recess, the optical paths in the bar condition and in the cross condition are equal to each other. In fact, the length of segment [A;D] is equal to the length of segment [G;D] and the length of segment [D;C] is equal to the length of segment [D;H]

On the contrary, for the "left/left" configuration of Figure 9, which is asymmetric, while the two optical paths of the beams 14 and 24 in the cross condition are equal to each other, such two optical paths differ from the optical paths in the bar condition, and also differ from each other depending on the pair of input/output guides considered: for the pair of guides 1 and 4, the bar condition optical path is equal to twice the length of the segment [A;D], while for the pair of guides 2 and 3 the bar condition optical path is equal to the twice the length of the segment [D;C].

If the mirror 6 has a non-negligible thickness s, then the distance W2 is preferably set to be equal to (W1-d/2), where d is an offset factor equal to s*sin($\theta$) ($\theta$ being the angle of incidence of the beam against the mirror surface). In this way, for a 2x2 optical switch the coupling losses are balanced for the pair of guides 1, 3 and 2, 4 and for the bar and cross conditions.

Alternatively, if it is known *a priori* that the device is intended to work as a 1x2 optical switch, for example using the first input guide 1 and the two output guides 3, 4, then the distances W1 and W2 can be made equal to each other, and the mirror 6 shifted so that the point D lies on the first reflecting surface 61.

For the spatial configurations discussed above, the insertion losses depend on the values of W1, W2 and $\theta$, as will be described in the following.

First of all, it is possible to calculate the optical path length $\chi$ for the three spatial configurations. We will assume that w=W1=W2.

For the "left/right" configuration of Figure 7:

$$\chi = \frac{2 \cdot w \cdot \cos(\theta\text{-}11.72°)}{\sin\theta}$$

For the "right/left" configuration of Figure 8:

$$\chi = \frac{2 \cdot w \cdot \cos(\theta\text{+}11.72°)}{\sin\theta}$$

For the "left/left" configuration of Figure 9:

$$\chi = \frac{1.9583 \cdot w}{\tan\theta}$$

Given the optical path length, the insertion loss due to the length of the optical path in the recess and the offset d, in the cross condition, can be calculated using the Miller formula:

$$Att(dB) = -10 \cdot \log\left\{\frac{16 \cdot n_1^2}{\left[\left(\frac{\chi \cdot \lambda}{2\pi \cdot R^2}\right)^2 + 1\right] \cdot (n_1+1)^4}\right\} \cdot \exp\left[-\frac{d^2}{R^2 \cdot \left(\left(\frac{\chi \cdot \lambda}{2\pi \cdot R^2}\right)^2 + 1\right)}\right]$$

where $n_1$ = 1.46 is the effective refraction index, R = 5 µm is the radius of the optical mode and $\lambda$ = 1.55 µm is the wavelength of the optical mode.

For a 1x2 switch, with an offset d equal to zero, assuming that w=W1=W2=11 µm, and substituting in the last formula the calculated values for the optical path $\chi$, the diagram of Figure 10 is obtained. In such a diagram, the insertion loss, or attenuation (in dB) is depicted as a function of the angle $\theta$ (in degrees), that is the angle of incidence of the beam against the mirror, for the three above described configurations. It can be seen that for all the three spatial configurations the insertion loss decreases for increasing values of the angle $\theta$. The reason for this is that, due to the other constraints on the distances W1 and W2, the dimensions of the recess decreases for increasing values of the angle $\theta$.

Actually, the diagram of Figure 10 does not take into account the fact that for increasing values of the angle $\theta$ an effect of truncation of part of the recess sides arises. This effect of truncation is particularly evident in the "left/left" configuration, which is asymmetric and in which the position of the mirror partially obscures the recess.

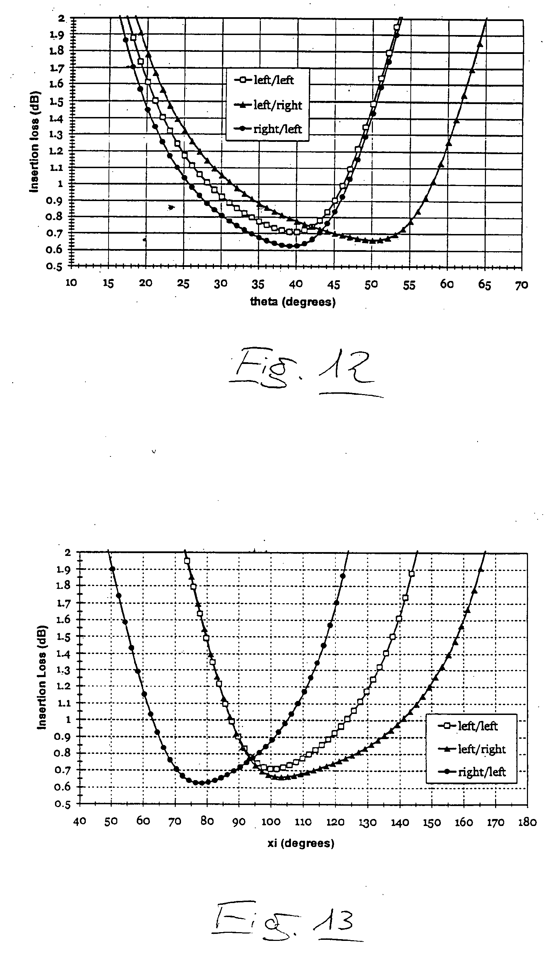

Once these effects are taken into account, the diagram of Figure 11 is obtained, from which it can be seen that for all the three spatial configurations, the insertion loss does not decrease indefinitely for increasing angle $\theta$: for each spatial configuration a value for the angle $\theta$ exists in correspondence of which the respective insertion loss reaches a minimum, after which if the value of the angle $\theta$ is further increased the insertion loss increases rather rapidly due to the effect of truncation of the recess sides. In order to obtain this diagram, the effect of truncation has been calculated in terms of percentage of optical power lost by a gaussian mode intercepting an opening asymmetric with respect to the optical axis of the mode itself.

Similar diagrams can be obtained changing the values for the distances W1 and W2, clearly with different values of insertion losses.

The analysis conducted so far allows to determine spatial configuration of a 1x2 optical switch for which the insertion loss is low. In particular it can be derived that:

- an acceptable range of values for the distances W1 = W2 is from 10 to 14 um;
- the acceptable range of values for the angle $\theta$ depends on the spatial configuration. For example, for the "right/left" configuration of Figure 7 the angle $\theta$ preferably ranges from 33° to 44°, while for the "left/right" configuration of Figure 8 the preferred range is from 44° to 55°;
- the resulting angle $\xi$, calculated starting from the chosen values for W1 = W2 and $\theta$, also depends on the specific spatial configuration. For example, for "right/left" configuration angle $\xi$ should preferably be in the range 68° to 90°, while for the "left/right" preferred values ranges from 93° to 115°;
- also resulting from the chosen values for W1 = W2 and $\theta$, the side length of the parallelogram should be in the range 19 µm to 29 µm in the case of the "right/left" configuration, while for the "left/right" configuration the parallelogram side length should range from 19 µm to 30 µm.

With the above exemplifying values, insertion losses ranging from 0.5 to 0.7 dB can be achieved.

From the diagram of Figure 11 it can also be observed that the "left/left" configuration is comparatively less advantageous, since in addition to having an insertion loss in the cross condition always slightly higher compared to the other two spatial configurations, as already discussed this configuration also has non-uniform losses in the cross and bar conditions.

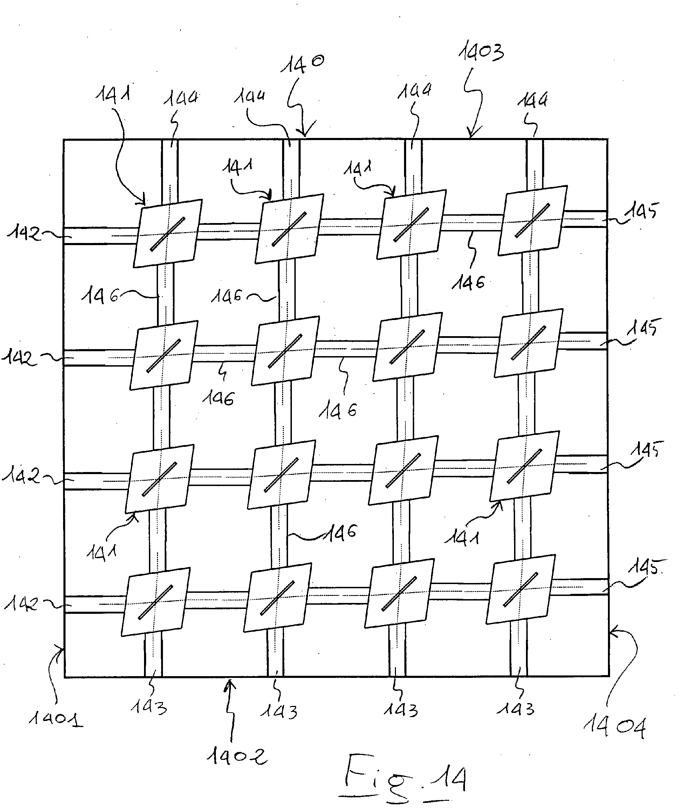

For a 2x2 optical switch, the offset factor d is to be introduced in the above formula to take into account the thickness of the mirror. The positions of the output guides 3 and 4 are then shifted of d/2 that is, W2 = W1 - d/2. Assuming a reasonable mirror thickness of about 2 μm and a value for W1 of 11 μm, and taking into account the effect of truncation, the diagram of Figure 12 is obtained. From this diagram it can be seen that if the mirror thickness is relatively small, similar ranges of values as for the 1x2 optical switch allows to obtain insertion losses in the range of 0.6 to 0.8 dB. The centre of the output optical guides is shifted of 0.2 - 0.3 μm compared to the 1x2 configuration.

Figure 13 depicts a similar diagram of insertion loss as a function of the angle ξ which, as previously mentioned, is calculated starting from the values of W1, W2 and θ.

Preferably, in order to further reduce the device insertion loss, the walls of the recess can be coated by an anti-reflecting layer.

It is important to note that it is not strictly necessary that the recess has the shape of a parallelogram. The recess may in general have the shape of an irregular polygon, in which case the vertex B will be the intersection of the extensions of the terminations 11, 31 of the guides 1 and 3 and the angle ξ will be the angle formed by said extensions.

It is also to be observed that the values indicated above relate to the case of an integrated optical switch with silica based glass optical guides of dimensions such that the radius of the guided mode is approximately 5 μm, and in which the optical transmissive medium in the recess is air. Clearly the above dimensions will vary depending on the diameter of the guided optical mode (for example, the optical guides could be tapered near their terminations, so as to widen the diameter of the guided optical mode), of the material forming the optical guides and of the optical properties of the medium in the recess.

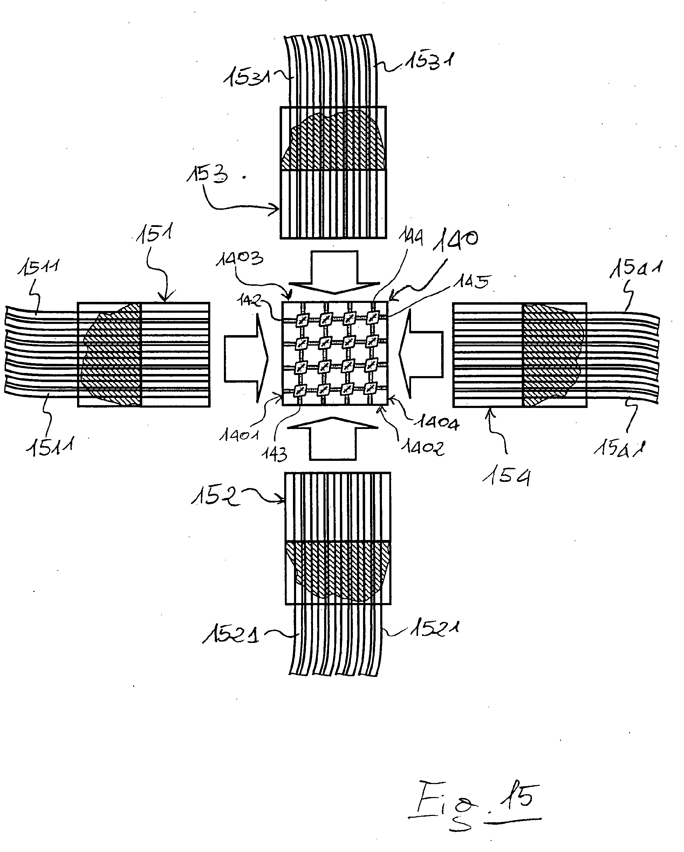

The optical switch configuration previously described lends to the integration in a chip of a one- or two-dimensional array of optical switches, optically connected to each other by means of integrated guides. For example, in Figure 14 a chip 140 is schematically shown in which a four-by-four array of 2x2 optical switches 141 of one of the types previously described is integrated; for example, the optical switches 141 have the "left/right" spatial configuration of Figure 7.

In the chip 140 there are integrated an array of four first input guides 141, arranged along a first input side 1401 of the chip, an array of four second input guides 143, arranged along a second input side 1402 of the chip, an array of four first output guides 144 arranged along a first output side 1403 of the chip, and an array of four second output guides 145 arranged along a second output side 1405 of the chip. Integrated guide segments 146 are provided to optically connect the switches 141 to each other.

As schematically shown in Figure 15, the array of switches of Figure 14 can be connected to the external world by means of four multifibre arrays 151, 152, 153, 154, each one comprising in the shown example four optical fibres 1511, 1521, 1531, 1541. Each multifibre array 151, 152, 153, 154 is arranged in correspondence of a respective side 1401, 1402, 1403, 1404 of the chip 140, in such a way as the fibres 1511, 1521, 1531, 1541 are aligned with the integrated guides 142, 143, 144, 145.

It is important to note that the parallelogram shape of the recess 5 is not to be intended as a limitation. The recess can actually have any shape. The design criteria outlined above will still be satisfied considering point B as the intersection between ideal extensions of the terminations 11 and 31, and point F the intersection between the ideal extensions of terminations 21 and 41. The angle ξ will thus be the angle formed by said ideal extensions.

It is also to be noted that the design criteria set forth above not only apply to optical switches integrated in silicon substrates by means of silicon micro-machining, but also to optical switches formed with optical fibres.

**Claims**

**1.** An optical switch comprising:

at least a first input optical guide (1) having a first beam exit termination (11) and a first and second output optical guides (3,4) respectively having first and second beam entrance terminations (31,41); a movable reflecting element (6), operatively associated with said exit termination and entrance terminations, movable between a first position and a second position, the first position causing an optical beam (14) exiting from said exit termination to be directed towards the first entrance termination, the second position causing said optical beam to be directed towards the second entrance termination, **characterized in that** a normal direction to each of said exit termination and entrance terminations forms a first angle ($\alpha$1), different from 0°, with an optical axis (12,32,42) of the respective guide, said first angle depending on optical properties of the guides and of an optical transmissive medium between the exit termination and entrance terminations and being such that back-reflected beams inside the guides are attenuated with respect to a guide termination perpendicular to the optical axes of the guides.

2. The optical switch of claim 1, in which said first angle ($\alpha$1) is such that back-reflected beams inside the guides are attenuated of at least 40 dB.

3. The optical switch of claim 2, in which the guides (1,3,4) are silica based glass guides, the optical transmissive medium is air and said first angle ($\alpha$1) is equal to or higher than approximately 7°.

4. The optical switch of claim 3, in which a first intersection (B) between ideal extensions of the first exit termination (11) and the first entrance termination (31) is located at a first distance (W1) from a centre (A) of the first exit termination and at a second distance (W2) from a centre (C) of the first entrance termination, and in which said extensions form a second angle ($\xi$) which depends on the first and second distances and on an angle of incidence ($\theta$) of an optical beam (14) exiting the first exit termination against the reflecting element (6) when the latter is in said first position.

5. The optical switch of claim 4, in which said first and second distances range from approximately 10 $\mu$m to approximately 14 $\mu$m.

6. The optical switch of claim 5, in which said second angle ($\xi$) is either acute and preferably comprised between approximately 68° and approximately 90°, or obtuse and preferably comprised between approximately 93° and approximately 115°.

7. The optical switch of claim 6, in which an optical path ([A;H]) from the first exit termination (11) to the second entrance termination (41) is substantially equal to twice an optical path ([A;D]) from the first exit termination to the reflecting element (6) when the latter is in the first position.

8. The optical switch of claim 7, in which said second distance (W2) is substantially equal to said first distance (W1) and the reflecting element (6) is so arranged that when in the first position the optical beam (14) exiting the first exit termination (11) enters the first entrance termination (31) substantially at the centre (C) thereof.

9. The optical switch of claim 7, further comprising a second input optical guide (2) having a second beam exit termination (21) with a normal direction forming said first angle ($\alpha$1) with an axis (22) of the second input guide, the second input guide being arranged so that when the reflecting element (6) is in the first position an optical beam (24) exiting the second exit termination is directed towards the second entrance termination (41), while when the reflecting element is in the second position the optical beam is directed towards the first entrance termination (31).

10. The optical switch of claim 9, in which ideal extensions of the second exit termination (21) and the second entrance termination (41) form said second angle ($\xi$) and intersect at a second intersection (F) located at said first distance (W1) from a centre (G) of the second exit termination and at said second distance (W2) from a centre (H) of the second entrance termination (41).

11. The optical switch according to claim .10, in which when in the first position the reflecting element (6) is located substantially midway between said first and second intersections (B,F), said second distance (W2) being substantially equal to said first distance (W1) minus a value (d/2) depending on a thickness (s) of the reflecting element.

12. The optical switch of claim 11, in which the axes (12,42) of the first input guide (1) and second output guide (4) are parallel to each other, and the axes (22,32) of the second input guide (2) and first output guide (3) are parallel to each other.

13. The optical switch of claim 12, in which the axes (12,42) of the first input guide (1) and second output guide (4) are perpendicular to the axes of the second input guide (2) and first output guide (3).

14. The optical switch according to anyone of the preceding claims, in which said at least a first input guide (1) and said first and second output guides (3,4) are integrated in a substrate (100) and converge to a recess (5) formed in the substrate and adapted to movably house the reflecting element (6).

15. The optical switch according to claim 14 when depending on claim 12, in which said recess (5) has a parallelogram shape with perimeter walls defined by the extensions of the first and second exit terminations (11,21) and first and second entrance terminations (31,41).

**16.** An optical switching device comprising a plurality of optical switches (141), **characterized in that** the optical switches are realized according to claim 14 and are integrated in a same substrate (140).

**17.** The optical switching device of claim 16, in which said plurality of optical switches (141) is arranged to form a two-dimensional array, the optical switching device further comprising a first and a second arrays of input guides (142,143), a first and a second arrays of output guides (144,145), and interconnection guides (146) for interconnecting the optical switches to each other.

**18.** The optical switching device of claim 17, in which each one of the arrays of guides (142,143,144,145) is arranged along a respective side (1401,1402,1403,1404) of the substrate (140).

**19.** The optical switching device of claim 18, further comprising four arrays of optical fibres (151,152,153,154) each one aligned to and connected with a respective one of arrays of guides (142,143,144,145).

Fig. 1

Fig. 2

Fig. 3

Fig. 4

Fig. 5

Fig. 6

Fig. 7

Fig.8

Fig.9

*Fig. 10*

*Fig. 11*

Fig. 12

Fig. 13

Fig. 14

Fig. 15

**European Patent Office**

## EUROPEAN SEARCH REPORT

Application Number

EP 01 10 8133

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 108 466 A (AKSYUK VLADIMIR A ET AL) 22 August 2000 (2000-08-22) * column 3, line 15-21 * * column 4, line 12-57 * * column 5, line 30 - column 6, line 25 * * figures 3,4,5A-C,6,7A-C * | 1-10 | G02B6/35 |
| X | US 6 195 478 B1 (FOUQUET JULIE E) 27 February 2001 (2001-02-27) * column 5, line 32 - column 6, line 16 * * column 8, line 53 - column 9, line 19; figures 3-5,10 * | 1-3,14, 16-19 | |
| A,D | MARXER C ET AL: "MICRO-OPTO-MECHANICAL 2 X 2 SWITCH FOR SINGLE-MODE FIBERS BASED ON PLASMA-ETCHED SILICON MIRROR AND ELECTROSTATIC ACTUATION" JOURNAL OF LIGHTWAVE TECHNOLOGY,IEEE. NEW YORK,US, vol. 17, no. 1, January 1999 (1999-01), pages 2-6, XP000908223 ISSN: 0733-8724 * the whole document * | 1,11 | TECHNICAL FIELDS SEARCHED (Int.Cl.7) G02B |
| A | TOSHIYOSHI H ET AL: "ELECTROMAGNETIC TORSION MIRRORS FOR SELF-ALIGNED FIBER-OPTIC CROSSCONNECTORS BY SILICON MICROMACHINING" IEEE JOURNAL OF SELECTED TOPICS IN QUANTUM ELECTRONICS,US,IEEE SERVICE CENTER, vol. 5, no. 1, January 1999 (1999-01), pages 10-17, XP000823382 ISSN: 1077-260X * abstract; figure 1 * | 1 | |

The present search report has been drawn up for all claims

| Place of search | Date of completion of the search | Examiner |
|---|---|---|
| MUNICH | 12 June 2001 | Riblet, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 01 10 8133

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2001

| Patent document cited in search report | | Publication date | Patent family member(s) | | Publication date |
|---|---|---|---|---|---|
| US 6108466 | A | 22-08-2000 | JP 2000111815 | A | 21-04-2000 |
| US 6195478 | B | 27-02-2001 | US 5960131<br>EP 1089108<br>EP 0935149<br>JP 11287962 | A<br>A<br>A<br>A | 28-09-1999<br>04-04-2001<br>11-08-1999<br>19-10-1999 |